# EUROPEAN PATENT APPLICATION

(11) **EP 4 651 134 A1**
(43) Date of publication of application: **19.11.2025**
(21) Application number: 25170193.4
(22) Date of filing: 11.04.2025
(51) Int. Cl.: G11B 27/031, G10H 1/00

(54) **METHODS AND APPARATUS FOR DYNAMIC MUSIC CREATION IN VIDEO CONTENT CREATION APPLICATIONS**

(30) Priority: 15.05.2024 WO PCT/CN2024/093324; 13.06.2024 US 202418719741
(71) Applicant: INTEL Corporation, Santa Clara, CA 95054 (US)
(72) Inventor: WOOSTER, Roland Peter, Folsom (US); ZHANG, Furong, Shanghai (CN); POTLURI, Srikanth, Folsom (US)
(74) Representative: Rummler, Felix

(57) **Abstract**

Systems, apparatus, articles of manufacture, and methods are disclosed for dynamic music creation in video content creation applications. An example apparatus to generate audio tracks for a video content creation application disclosed herein includes interface circuitry, machine-readable instructions, and at least one processor circuit to be programmed by the machine-readable instructions to: analyze a video to determine video characteristics; generate a prompt for a machine learning model based on the video characteristics and at least one user preference; provide the prompt to machine learning model execution circuitry to cause generation of an audio track based on the prompt; and provide the audio track to a video content creation application.

## Description

### RELATED APPLICATION

This application claims the benefit of priority to Patent Cooperation Treaty (PCT) Application No. PCT/CN2024/093324 filed May 15, 2024. Patent Cooperation Treaty (PCT) Application No. PCT/CN2024/093324 is incorporated by reference in its entirety.

### BACKGROUND

When editing video content, it is common to add a background music track to the video content. When used appropriately, background music can enhance the video content viewing experience.

### BRIEF DESCRIPTION OF THE DRAWINGS

FIG. 1 is a block diagram of an example environment in which an example audio creation circuitry operates to generate audio tracks for media content.
FIG. 2 is a block diagram of an example implementation of the audio creation circuitry of FIG. 1.
FIG. 3 illustrates example voice audio isolation processing performed by the audio creation circuitry of FIG. 1.
FIG. 4 is an example cold-lighting video analyzed by the audio creation circuitry of FIG. 1.
FIG. 5 is an example warm-lighting video analyzed by the audio creation circuitry of FIG. 1.
FIG. 6 illustrates person and/or scene detection as performed by the audio creation circuitry of FIG. 1.
FIG. 7 is a flowchart representative of example machine-readable instructions and/or example operations that may be executed, instantiated, and/or performed by example programmable circuitry to implement the audio creation circuitry of FIG. 2.
FIG. 8 is a table illustrating an example text management data structure generated by the audio creation circuitry of FIG. 1.
FIG. 9 is a block diagram illustrating an example workload schedule implemented by the audio creation circuitry of FIG. 1.
FIG. 10 is an example user interface implemented by the audio creation circuitry of FIG. 1.
FIG. 11 is a block diagram of an example processing platform including programmable circuitry structured to execute, instantiate, and/or perform the example machine-readable instructions and/or perform the example operations of FIG. 7 to implement the audio creation circuitry of FIG. 2.
FIG. 12 is a block diagram of an example implementation of the programmable circuitry of FIG. 11.
FIG. 13 is a block diagram of another example implementation of the programmable circuitry of FIG. 11.

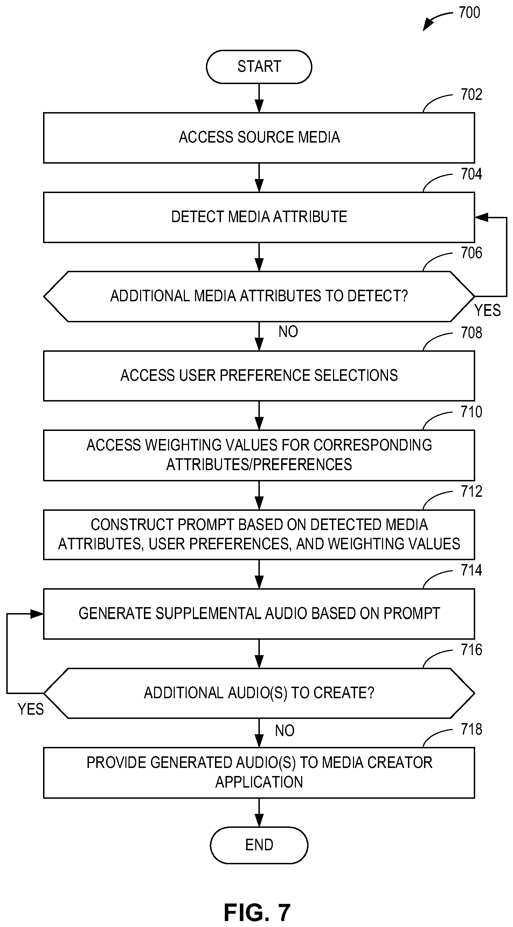

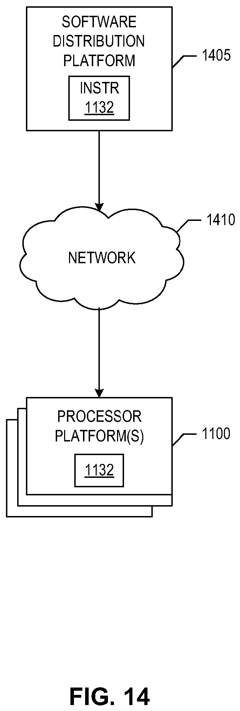

FIG. 14 is a block diagram of an example software/firmware/instructions distribution platform (e.g., one or more servers) to distribute software, instructions, and/or firmware (e.g., corresponding to the example machine-readable instructions of FIG. 7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Adding a background audio track to video content can enhance the viewing experience for viewers, especially when the background music aligns with the mood or theme of the video. However, today the process for a content creator is difficult. The content creator has to pick through thousands of third-party created songs and music to try to find something suitable, and of course, most of the music available is copyrighted by the original musician who created it. Video content publishing platforms (e.g., YouTube, Vimeo, etc.) allow content creators to use music from most well-known artists in the videos uploaded by the content creators, however, the publishing platforms typically de-monetize the videos that use copyrighted music for the content creator and all monetization of the video content goes entirely to the musician, not the content creator. Thus, by simply using a single copyrighted song, the content creator loses 100% of the monetization value of their content. Therefore, content creators desire to use copyright-free and/or generated music. Currently, content creators must manually generate new music, generate music via a text-to-music method, or pay a third party to generate music.

Methods and apparatus disclosed herein analyze video content and automatically generate copyright-free audio. Such methods and apparatus accept user preferences as inputs from content creators to tailor audio track generation to the preferences of the content creator. In some examples, methods and apparatus analyze the video content to determine video content characteristics (e.g., source media attributes) to use in audio track generation. Example embodiments generate prompts for machine learning models based on the video characteristics and the user preferences. In some examples, methods and apparatus disclosed herein provide the audio track to media creation applications (e.g., Adobe Premiere Pro, Davinci Resolve, AVID, Vegas Magix, PowerDirector, etc.) used by the content creator. In examples disclosed herein, a user is enabled to update user preferences for generation of an updated audio track based on the updated user preferences.

Examples disclosed herein identify a variety of video characteristics, including, but not limited to: whether, and where, the video contains dialogue; color tone of the video; a type of activity being performed in the video; speed of action in the video; environment(s) detected in the video; person(s) detected in the video; number of people or activity detection; happiness detection (e.g., using facial detection to determine if a scene is a happy scene or a somber scene); and type of video (e.g., landscape, cartoon, or feature film).

Methods and apparatus disclosed herein generate audio tracks for the video content based in part on user preferences including, but not limited to: duration (e.g., scene music segmentation); background music priority; music preference (e.g., genre preference); and weights for the video characteristics. Methods and apparatus disclosed herein cause presentation of a user interface to allow a user to input user preferences for audio generation.

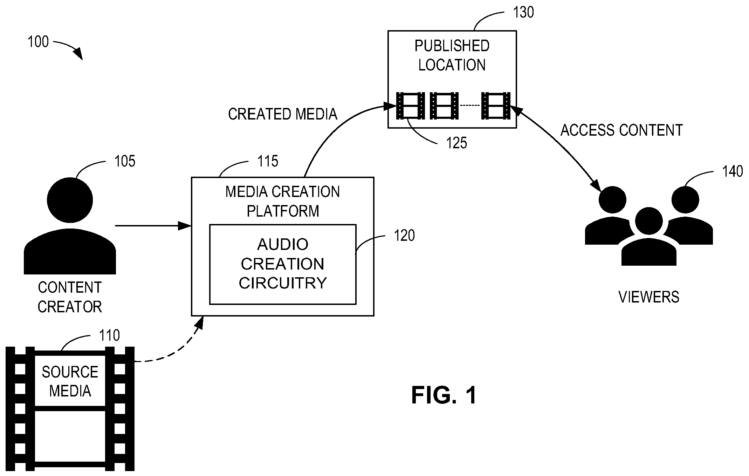

FIG. 1 is a block diagram of an example environment 100 in which an example audio creation circuitry 120 operates to generate audio tracks for media creation applications. The example environment includes an example content creator 105, an example source media, and example media creation platform, the example audio creation circuitry 120, an example created media 125, an example published location 130, and example viewers 140.

The example media creation platform 115 is a content creation application. Content creation applications are digital tools or services that enable users to create, edit, and publish media content. Example content creation applications may include, for example, Adobe Premiere Pro, Davinci Resolve, AVID, Vegas Magix, PowerDirector, etc. In some examples, the media content creation platform 115 is an application hosted on a device of the content creator 105. In other examples, the media creation platform 115 is a web application, a cloud application, etc. The example media creation platform receives the source media 110 and audio tracks generated by the audio creation circuitry 120 to generate the created media 125, which can ultimately be published at the published location 130.

The example audio creation circuitry 120 is an application. In some examples, the audio creation circuitry 120 is a computing device such as a server, a personal computer, a workstation, a mobile device, or any other type of computing device. In some examples, the audio creation circuitry 120 is an Application-Specific Integrated Circuit, an XPU, a Field-Programmable Gate Array, and other any other processor circuitry and /or combination of processor circuitries. In the illustrated example of FIG. 1, the audio creation circuitry 120 is a component of the media creation platform 115. In other examples, the audio creation circuitry 120 is a standalone application.

The example audio creation circuitry 120 analyzes the source media 110 and automatically generates copyright-free audio tailored to the content of the source media 110 and the preferences of the content creator 105. The example audio creation circuitry 120 analyzes the source media 110 to determine video content characteristics to use in audio track generation. In some examples, the audio creation circuitry 120 executes a machine learning model to analyze the source media 110. The example audio creation circuitry 120 identifies a variety of video characteristics, including, but not limited to: whether, and where, the clip contains dialogue; color tone of the video; a type of activity being performed in the video; speed of action in the video; environment(s) detected in the video; person(s) detected in the video; number of people or activity detection; happiness detection (e.g., using facial detection to determine if a scene is a happy scene or a somber scene); and type of video (e.g., landscape, cartoon, or feature film). The example audio creation circuitry 120 adjusts variables used to generate audio tracks based on the identified video characteristics. For example, the audio creation circuitry 120 can perform voice isolation processing of the source media 110 to identify portions of the source media 110 that include dialogue. In those examples, the audio creation circuitry 120 uses that information to generate an audio track that plays quieter/less distracting music to ensure the dialogue is clear and audible even with the background music.

In some examples, the audio creation circuitry 120 performs color analysis on the source media 110 to determine the color grading/warmth of the video. In those examples, the audio creation circuitry 120 uses the color tone of the source media 110 to derive a mood of the video and generate an audio track that fits the mood. In some examples, the audio creation circuitry 120 performs people detection using facial recognition and/or or other object recognition techniques. In those examples, the audio creation circuitry 120 can generate audio to assign to specific people, such that particular instruments or types of music are used with greater emphasis for particular subjects. In some examples, the audio creation circuitry 120 identifies the type of activity being performed. For example, the audio creation circuitry 120 can identify that a sport is being played and generates an audio track with a genre of music that matches that sport. Environment detection can include, for example, identifying the scene takes place by a waterfall or an ocean, which can be used by the audio creation circuitry 120 to generate an audio track that is suitable for flowing water.

The example audio creation circuitry 120 generates audio tracks for the video content based in part on user preferences including, but not limited to: duration (e.g., scene music segmentation); background music priority; music preference (e.g., genre preference); a preferred music generating machine learning model; weights and/or other instructions for use of the video characteristics. For example, the content creator 105 can indicate how the music should be segmented across the source media 110. For example, the source media 110 may have an average clip length of six seconds and the average scene may be from 20-120 seconds - meaning that each scene includes 3-20 independent camera clips. It might be desirable that the music for a particular scene be consistent, however when there are only 20 seconds per scene, switching to new music every scene can be undesirable and continuation of the same music from one scene to another is preferred. The audio creation circuitry 120 enables the content creator 105 to control which scenes are grouped together, and which are separated if the content creator 105 wishes to do so. In some examples, duration preferences include a minimum and/or maximum track length. In some examples, the audio creation circuitry 120 can override user preferences based on the identified video characteristics.

In some examples, the audio creation circuitry 120 causes presentation of a user interface to allow a content creator 105 to input user preferences for audio generation. In some examples, the audio creation circuitry 120 allows the content creator 105 to adjust parameters on a sliding scale. In some examples, the audio creation circuitry 120 performs natural language comprehension to extract meaning from a text input from the content creator 105. For example, the content creator 105 can input text stating a desired music genre be used for a specific person appearing in the source media 110 and the audio creation circuitry 120 converts the input to variables to be used in generation of the audio track. In some examples, the audio creation circuitry 120 allows a user to update user preferences for generation of an updated audio track based on the updated user preferences.

The example audio creation circuitry 120 generates prompts for machine learning models based on the video characteristics and the user preferences. The example audio creation circuitry 120 creates prompts that include a plurality of entries, some of the entries related to the user preferences and some of the entries related to the identified video characteristics. In some examples, each entry has three elements: 1) an index to indicate whether the entry is related to the user input or an identified video characteristic; 2) an indication of the specific variable of user input or video characteristic (e.g., music duration or type); and 3) a variable value from user input or video characteristic (e.g., 20s for duration, or pop for music type, "happy" was detected from scene). In some examples, audio creation circuitry 120 executes a programming language (e.g., Python, c++ or other programming language) to extract the text to form one or two sentences as the prompt of AI music generator. In an example where the source media 110 includes a video of a little girl smiling and the user inputs a preference of "10s" duration and "pop" music genre, the audio creation circuitry 120 generates the example prompt: "10s duration, pop happy music." The complexity of the prompt is mostly decided by the video and the complexity of the user preferences input by the content creator 105. Furthermore, this structure can be also easily extended based on the needs.

In some examples, the audio creation circuitry 120 executes a machine learning model to generate an audio track based on the prompt generated from the video characteristics and user preferences. In some examples, the audio creation circuitry 120 sends the prompt to an external music generating machine learning model. In some examples, the audio creation circuitry 120 provides the audio track to media creation platform 115. In some examples, the audio creation circuitry 120 provides the audio track to the content creator 105.

The example published location 130 is video content publishing platform such as YouTube, Vimeo, etc. The example published location 130 allows the content creator 105 to publish the created media 125 for viewing by viewers 140.

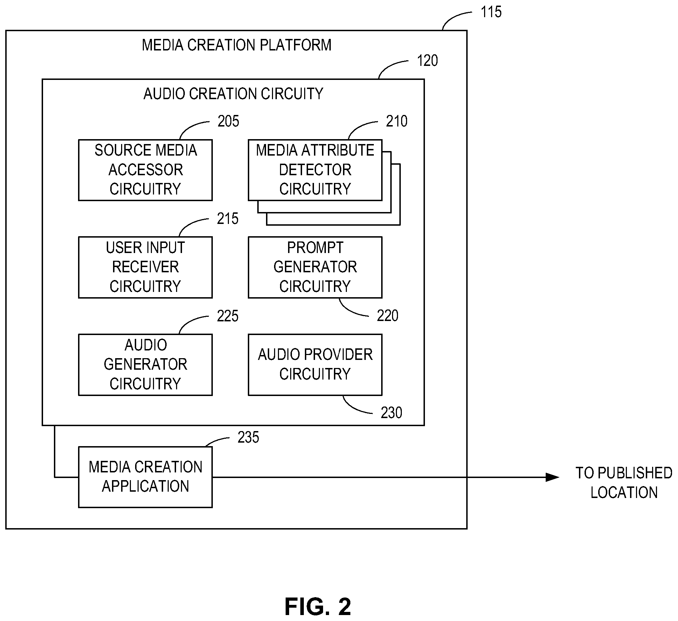

FIG. 2 is a block diagram of an example implementation of the audio creation circuitry 120 of FIG. 1 to generate audio tracks for media content. The audio creation circuitry 120 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the audio creation circuitry 120 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers. The example audio creation circuitry 120 of the illustrated example of FIG. 2 includes example source media accessor circuitry 205, example media attribute detector circuitry 210, example user input receiver circuitry 215, example prompt generator circuitry 220, example audio generator circuitry 225, and example audio provider circuitry 230.

The example source media accessor circuitry 205 of the illustrated example of FIG. 2 accesses a source media 110 for which audio tracks are to be generated. The example source media accessor circuitry 205 identifies a format of the source media 110 (e.g., .webm, .mpg, .mp2, mpeg, .mpe, .mpv, .ogg, .mp4, .m4p, .m4v, .avi, .wmv, .mov, .qt, .flv, .swf, etc.). In some examples, the source media access circuitry 205 converts the source media 110 from a first format to a second format. In some examples, the source media 110 includes multiple files. In some examples, the source media access circuitry 110 combines multiple source media 110 files into a single file for processing. In some examples, the source media accessor circuitry 205 splits a source media 110 file into multiple files (e.g., a first file for audio and a second file for video). In some examples, the source media accessor circuitry 205 is instantiated by programmable circuitry executing source media accessor circuitry instructions and/or configured to perform operations such as those represented by the flowchart of FIG. 7.

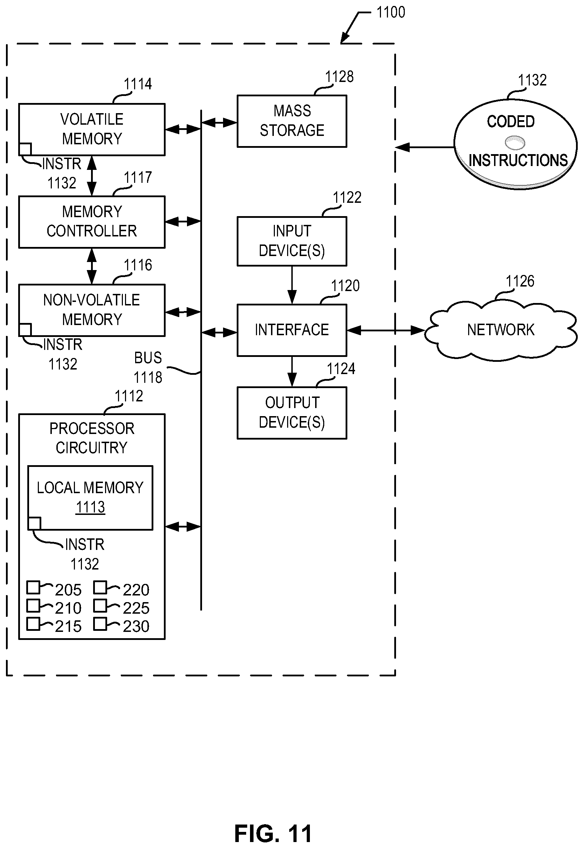

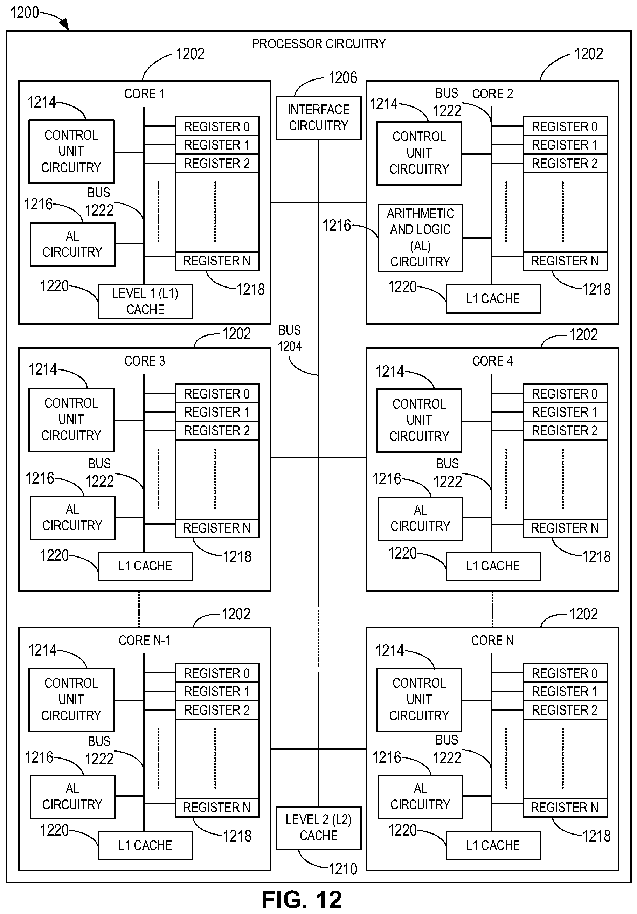

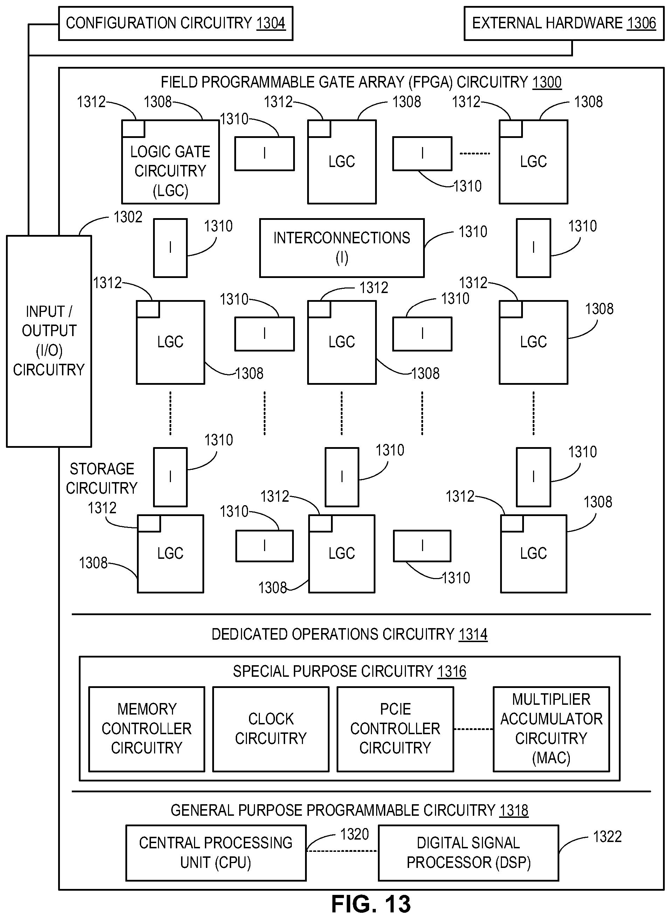

In some examples, the audio creation circuitry 120 includes means for accessing source media. For example, the means for accessing may be implemented by source media accessor circuitry 205. In some examples, the source media accessor circuitry 205 may be instantiated by programmable circuitry such as the example programmable circuitry 1112 of FIG. 11. For instance, the source media accessor circuitry 205 may be instantiated by the example microprocessor 1200 of FIG. 12 executing machine executable instructions such as those implemented by at least blocks 702 of FIG. 7. In some examples, the source media accessor circuitry 205 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the source media accessor circuitry 205 may be instantiated by any other combination of hardware, software, and/or firmware. For example, the source media accessor circuitry 205 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The example media attribute detector circuitry 210 of the illustrated example of FIG. 2 detects media attributes of the source media 110. In some examples, the media attribute detector circuitry 210 executes a machine learning model to analyze the source media 110. The example media attribute detector circuitry 210 identifies a variety of video characteristics (e.g., media attributes), including, but not limited to: whether, and where, the clip contains dialogue; color tone of the video; a type of activity being performed in the video; speed of action in the video; environment(s) detected in the video; person(s) detected in the video; number of people or activity detection; happiness detection; and type of video.

The example media attribute detector circuitry 210 performs voice isolation processing to identify segments of the source media 110 that contain voice. In some examples, the media attribute detector circuitry 210 identifies start times and end times for segments of the source media 110 containing voice. In some examples, the media attribute detector circuitry 210 generates a unit step function based on the identified segment(s). The unit step function is a function of time that has a value of zero for all values of time except during the time period corresponding to the source media 110 segments identified as containing voice, where the unit step function has a non-zero value (e.g., a value of 1).

In some examples, the media attribute detector circuitry 210 performs color analysis on the source media 110 to determine the color grading/warmth of the video. In those examples, the media attribute detector circuitry 210 uses the color tone of the source media 110 to derive a mood of the video. In some examples, the media attribute detector circuitry 210 generates graphs representing the color distribution of the source media 110. These graphs can include, but are not limited to histogram graphs including for each of the red pixel values, green pixel values, and blue pixel values in the source media 110, CIE Chromaticity graphs, waveform graphs, vector scope graphs, etc. The media attribute detector circuitry 210 analyzes the color grading of the source media 110 to determine whether the source media 110 has a bias towards colder (e.g., darker, moodier, scarier, etc.) tones or warmer (e.g., happy, fun, light, etc.) tones.

The example media attribute detector circuitry 210 uses facial recognition techniques and/or other object recognition techniques to determine the number of people that appear in a scene in the source media 110. In some examples, the media attribute detector circuitry 210 identifies specific individuals that appear in the source media 110 using these techniques. In some examples, the media attribute detector circuitry 210 performs people detection using facial recognition and/or or other object recognition techniques. In some examples, the media attribute detection circuitry 210 detects environments in the source media 110. Environment detection can include, for example, identifying the scene takes place by a waterfall or an ocean, which can be used to generate an audio track that is suitable for flowing water. In some examples, the media attribute detector circuitry 210 identifies the type of activity being performed. For example, the media attribute detector circuitry 210 can identify that a sport is being played and generates an audio track with a genre of music that matches that sport.

The example media attribute detector circuitry 210 generates values for music generation parameters based on the media attributes detected from the source media 110. For example, the media attribute detector circuitry 210 may generate a value of 10 (on a scale of 1-10) for a happiness level parameter corresponding to a detected happiness level a source media 110 of a sports team winning a championship game. In some examples, media attribute parameters values are numbers within a defined range (e.g., a 0-10 scale, a 0-1 scale, etc.), numbers corresponding to an absolute value (e.g., the number of people in a video), and/or qualitative values (e.g., the type of activity being performed).

In some examples, the media attribute detection circuitry 210 identifies different scene segments in the source media 110 based on the detected media attributes. The media attribute detection circuitry 210 identifies changes in scenes by identifying changes in detected media attributes. For example, the media attribute detection circuitry 210 may use a detected abrupt change in the environment in the source media 110 to mark the end of a first scene segment and the beginning of a second scene segment. In some examples, the media attribute detector circuitry 210 is instantiated by programmable circuitry executing source media accessor circuitry instructions and/or configured to perform operations such as those represented by the flowchart of FIG. 7.

In some examples, the audio creation circuitry 120 includes means for detecting media attributes. For example, the means for detecting may be implemented by media attribute detector circuitry 210. In some examples, the media attribute detector circuitry 210 may be instantiated by programmable circuitry such as the example programmable circuitry 1112 of FIG. 11. For instance, the media attribute detector circuitry 210 may be instantiated by the example microprocessor 1200 of FIG. 12 executing machine executable instructions such as those implemented by at least blocks 704, 706 of FIG. 7. In some examples, the media attribute detector circuitry 210 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the media attribute detector circuitry 210 may be instantiated by any other combination of hardware, software, and/or firmware. For example, the media attribute detector circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The example user input receiver circuitry 215 of the illustrated example of FIG. 2 accesses user preferences for audio generation. User preferences include but are not limited to duration, background music priority, music preference, a preferred music generating machine learning model, weights and/or other instructions for use of the media attributes. In some examples, user preferences include a desired variable for the audio track to be generated (e.g., a specific genre of music to be used when a particular individual appears in the video). In some examples, the user input receiver circuitry 215 causes presentation of a user interface to allow a content creator 105 to input the user preferences.

In some examples, the user interface enables the content creator 105 to select user preferences from a pre-defined list (e.g., a list of music genres), adjust audio generation variables on a sliding scale (e.g., a desired bpm for the generated audio), and/or enter plain language instructions for audio generation. In some examples, the user input receiver circuitry 215 performs natural language comprehension to extract meaning from a plain language input from the content creator 105. For example, the content creator 105 can input text stating a desired music genre be used for a specific person appearing in the source media 110 and the user input receiver circuitry 215 converts the input to variables to be used in generation of the audio track. In some examples, the user input receiver circuitry 215 enables a user to update user preferences for generation of an updated audio track based on the updated user preferences. In some examples, the user interface also enables the content creator 105 to set weighting values for corresponding attributes/preferences. For example, the user interface enables the user to place a high or low priority on the color tone of the video influencing the generation of the audio track. The user input receiver circuitry 215 accesses the weighting values set by the content creator 105 for use in audio generation. In some examples, the user input receiver circuitry 215 is instantiated by programmable circuitry executing source media accessor circuitry instructions and/or configured to perform operations such as those represented by the flowchart of FIG. 7.

In some examples, the audio creation circuitry 120 includes means for accessing user preferences. For example, the means for accessing may be implemented by user input receiver circuitry 215. In some examples, the user input receiver circuitry 215 may be instantiated by programmable circuitry such as the example programmable circuitry 1112 of FIG. 11. For instance, the user input receiver circuitry 215 may be instantiated by the example microprocessor 1200 of FIG. 12 executing machine executable instructions such as those implemented by at least blocks 708, 710 of FIG. 7. In some examples, the user input receiver circuitry 215 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the user input receiver circuitry 215 may be instantiated by any other combination of hardware, software, and/or firmware. For example, the user input receiver circuitry 215 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The example prompt generator circuitry 220 of the illustrated example of FIG. 2 generates prompts for a music generating machine learning model based on the video characteristics and the user preferences. The prompt generator circuitry 220 creates the prompt(s) based on a plurality of entries, some of the entries related to the user preferences and some of the entries related to the identified media attributes. In some examples, each entry includes an index to indicate whether the entry is related to a user preference or a media attribute, the variable the entry pertains to (e.g., a sub-index), and a value for the variable. In some examples, the prompt generator circuitry 220 implements a text management structure. The text management structure is a table including the plurality of entries. In some examples, prompt generator circuitry 220 executes a programming language to extract text from the entries to form the prompt of AI music generator. In some examples, the prompt generator circuitry 220 generates the prompt based on the specific music generating machine learning model to be used. For example, a first machine learning model may require a first input format/syntax and a second machine learning model may require a second input format/syntax. The prompt generator circuitry 220 generates the prompt to meet the format/syntax requirements of the machine learning model to be used. In some examples, the prompt generator circuitry 220 generates multiple prompts for a single source media 110. In some examples, the prompt generator circuitry 220 is instantiated by programmable circuitry executing source media accessor circuitry instructions and/or configured to perform operations such as those represented by the flowchart of FIG. 7.

In some examples, the audio creation circuitry 120 includes means for generating prompts. For example, the means for generating may be implemented by prompt generator circuitry 220. In some examples, the prompt generator circuitry 220 may be instantiated by programmable circuitry such as the example programmable circuitry 1112 of FIG. 11. For instance, the prompt generator circuitry 220 may be instantiated by the example microprocessor 1200 of FIG. 12 executing machine executable instructions such as those implemented by at least blocks 712 of FIG. 7. In some examples, the prompt generator circuitry 220 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the prompt generator circuitry 220 may be instantiated by any other combination of hardware, software, and/or firmware. For example, the prompt generator circuitry 220 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The example audio generator circuitry 225 of the illustrated example of FIG. 2 generates audio track(s) for the source media 110. In some examples, the audio generator circuitry 225 executes a machine learning model to generate an audio track based on the prompt generated from the video characteristics and user preferences. In some examples, the audio generator circuitry 225 sends the prompt to an external music generating machine learning model. In some examples, the audio generator circuitry 225 executes a machine learning model selected by the user. In some examples, the audio generator circuitry 225 generates multiple audio tracks for the source media 110. In some examples, the audio generator circuitry 225 is instantiated by programmable circuitry executing source media accessor circuitry instructions and/or configured to perform operations such as those represented by the flowchart of FIG. 7.

In some examples, the audio creation circuitry 120 includes means for generating audio. For example, the means for generating may be implemented by audio generator circuitry 225. In some examples, the audio generator circuitry 225 may be instantiated by programmable circuitry such as the example programmable circuitry 1112 of FIG. 11. For instance, the audio generator circuitry 225 may be instantiated by the example microprocessor 1200 of FIG. 12 executing machine executable instructions such as those implemented by at least blocks 714, 716 of FIG. 7. In some examples, the audio generator circuitry 225 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the audio generator circuitry 225 may be instantiated by any other combination of hardware, software, and/or firmware. For example, the audio generator circuitry 225 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The example audio provider circuitry 230 of the illustrated example of FIG. 2 provides the generated audio tracks to the content creator 105. In some examples, the audio provider circuitry 230 provides the generated audio to a media creator application. In some examples, the audio provider circuitry 230 provides the audio track to the content creator 105 directly. In some examples, the audio provider circuitry 230 combines the generated audio track(s) with the source media 110 to generate a combined media and provides the combined media to the content creator 105, directly or via the media creator application. In some examples, the audio provider circuitry 230 is instantiated by programmable circuitry executing source media accessor circuitry instructions and/or configured to perform operations such as those represented by the flowchart of FIG. 7.

In some examples, the audio creation circuitry 120 includes means for providing audio tracks. For example, the means for providing may be implemented by audio provider circuitry 230. In some examples, the audio provider circuitry 230 may be instantiated by programmable circuitry such as the example programmable circuitry 1112 of FIG. 11. For instance, the audio provider circuitry 230 may be instantiated by the example microprocessor 1200 of FIG. 12 executing machine executable instructions such as those implemented by at least blocks 718 of FIG. 7. In some examples, the audio provider circuitry 230 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the audio provider circuitry 230 may be instantiated by any other combination of hardware, software, and/or firmware. For example, the audio provider circuitry 230 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the audio creation circuitry 120 of FIG. 1 is illustrated in FIG. 2, one or more of the elements, processes, and/or devices illustrated in FIG. 2 may be combined, divided, re-arranged, omitted, eliminated, and/or implemented in any other way. Further, the example source media accessor circuitry 205, the example media attribute detector circuitry 210, the example user input receiver 215, the example prompt generator circuitry 220, the example audio generator circuitry 225, the example audio provider circuitry 230, and/or, more generally, the example audio creation circuitry 120 of FIG. 2, may be implemented by hardware alone or by hardware in combination with software and/or firmware. Thus, for example, any of the example source media accessor circuitry 205, the example media attribute detector circuitry 210, the example user input receiver 215, the example prompt generator circuitry 220, the example audio generator circuitry 225, the example audio provider circuitry 230, and/or, more generally, the example audio creation circuitry 120, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example audio creation circuitry 120 of FIG. 2 may include one or more elements, processes, and/or devices in addition to, or instead of, those illustrated in FIG. 2, and/or may include more than one of any or all of the illustrated elements, processes and devices.

A flowchart representative of example machine-readable instructions, which may be executed by programmable circuitry to implement and/or instantiate the audio creation circuitry 120 of FIG. 2 and/or representative of example operations which may be performed by programmable circuitry to implement and/or instantiate the audio creation circuitry 120 of FIG. 2, is shown in FIG. 7. The machine-readable instructions may be one or more executable programs or portion(s) of one or more executable programs for execution by programmable circuitry such as the programmable circuitry 1112 shown in the example processor platform 1100 discussed below in connection with FIG. 11 and/or may be one or more function(s) or portion(s) of functions to be performed by the example programmable circuitry (e.g., an FPGA) discussed below in connection with FIGS. 12 and/or 13. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart illustrated in FIG. 7, many other methods of implementing the example audio creation circuitry 120 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 7 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

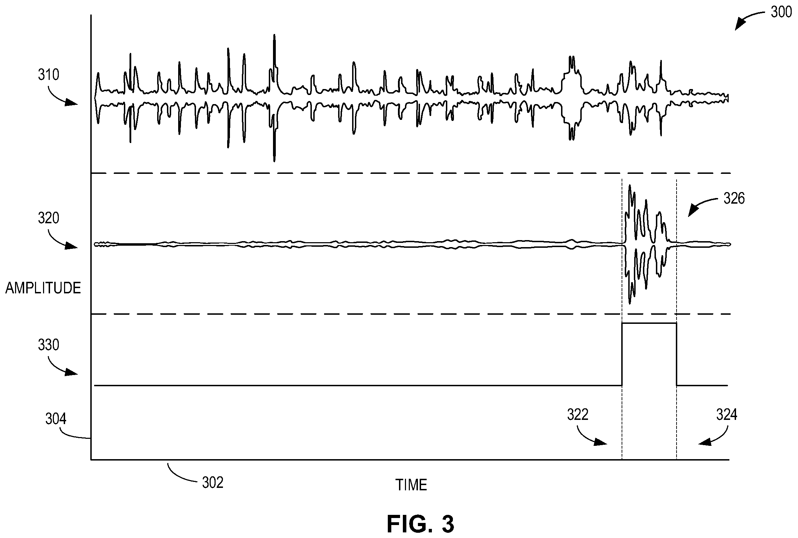

FIG. 3 is a waveform graph 300 illustrating example voice audio isolation processing performed by the audio creation circuitry 120 of FIG. 1. The waveform graph 300 includes a time axis 302 and an amplitude axis 304. The waveform graph 300 includes a first audio track 310, a second audio track 320, and a unit step function 330. The first audio track 310 is a source audio track captured from the source media 110. In some examples, the audio creation circuitry 120 performs voice isolation processing to isolate a portion of the audio track that contains voice. The second audio track 320 represents the first audio track 310 with portions not containing voice removed. In some examples, the audio creation circuitry 120 identifies a start time 322 and an end time 324 for a segment 326 of the second audio track 320 containing voice. In some examples, the audio creation circuitry 120 identifies a plurality of segments 326 for the second audio track containing voice and identifies a plurality of corresponding start times 322 and end times 324.

In some examples, the audio creation circuitry 120 generates a unit step function 330 based on the identified segment(s) 326. The unit step function 330 is a function of time that has a value of zero for all values of time except between start time(s) 322 and corresponding end time(s) 324, where the unit step function 330 has a non-zero value (e.g., a value of 1). In some examples, the unit step function 330 may be represented by a data structure that encodes start times 322 and stop times 324. In some examples, the audio creation circuitry 120 generates audio based on the unit step function 330. For example, the audio creation circuitry 120 reduces the dynamic range of generated audio (e.g., does not include drum beats or guitar riffs) for values of time where the unit step function has a non-zero value.

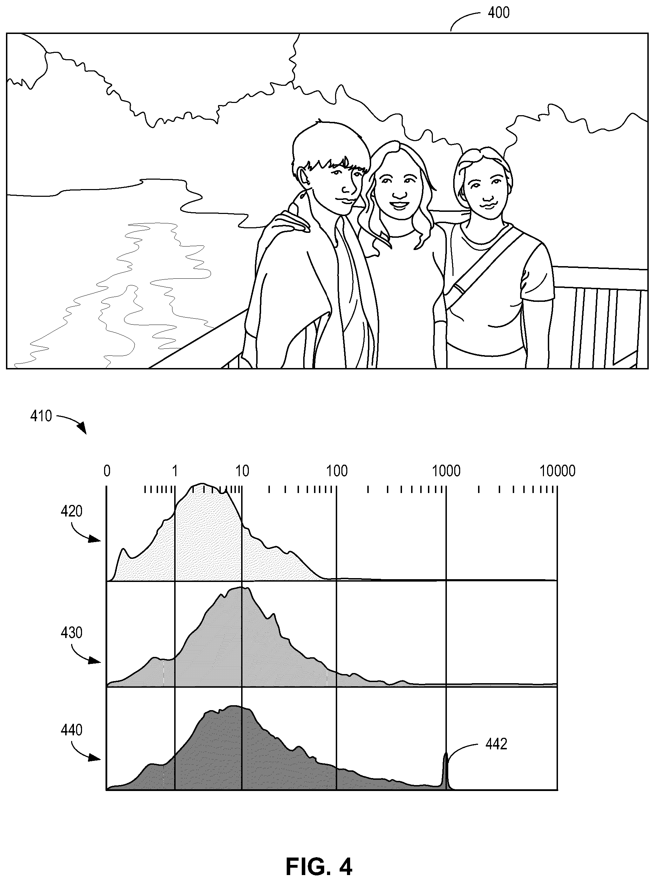

FIG. 4 is an example cold-lighting video 400 analyzed by the audio creation circuitry 120 of FIG. 1. In the illustrated example of FIG. 4, the audio creation circuitry 120 generates a histogram graph 410 including a red color histogram 420, a green color histogram 430, and a blue color histogram 440. The x axis of the histograms 420, 430, and 440 represents the pixel intensity and the y axis represents the number of pixels. Each pixel in the cold-lighting video 400 can be represented by a brightness value for each of the colors red, green, and blue. The audio creation circuitry 120 generates the histograms 420, 430, 440 by determining the red, green, and blue pixel intensities for each pixel in the cold-lighting video 400 and using that plotting the number of pixels corresponding to each pixel intensity. In the illustrated example of FIG. 4, the blue histogram 440 has a spike 442, at a pixel intensity of about 1000, indicating there is a large amount of blue in the cold-lighting video 400. In some examples, the audio creation circuitry 120 generates other graphs representing the color distribution of the cold-lighting video 400. For example, the audio creation circuitry 120 generates CIE Chromaticity graphs, waveform graphs, vector scope graphs, etc. The audio creation circuitry 120 analyzes the color grading of the source media 110 to determine whether the source media 110 has a bias towards colder (e.g., darker, moodier, scarier, etc.) tones or warmer (e.g., happy, fun, light, etc.) tones. In the illustrated example of FIG. 4, the audio creation circuitry 120 identifies the cold-lighting video 400 as having a colder mood. The audio creation circuitry 120 generates colder audio (e.g., an instrumental, music with melancholy lyrics, etc.) based on the identified colder mood.

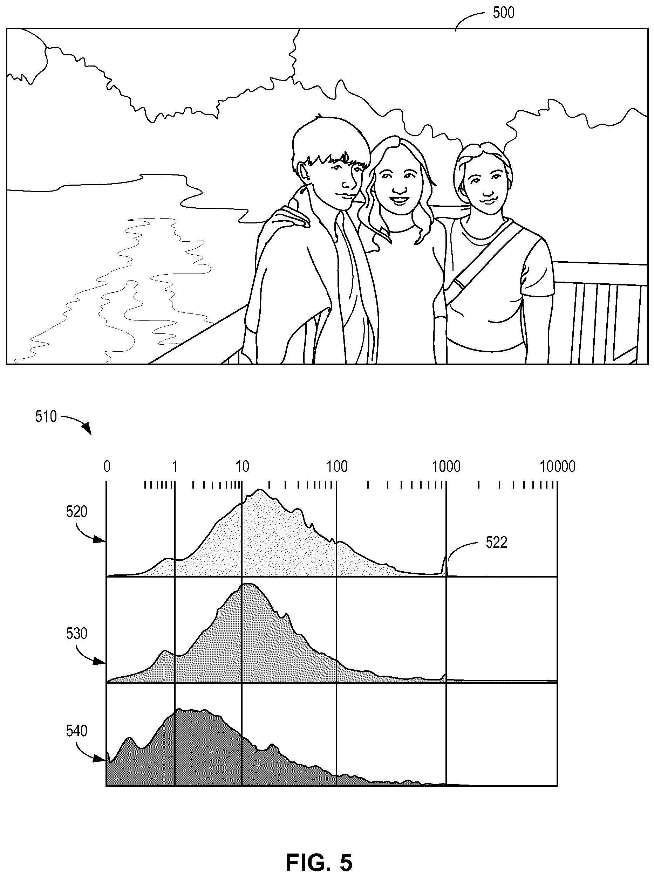

FIG. 5 is an example warm-lighting video 500 analyzed by the audio creation circuitry 120 of FIG. 1. In the illustrated example of FIG. 5, the audio creation circuitry 120 generates a histogram graph 510 including a red color histogram 520, a green color histogram 530, and a blue color histogram 540. The x axis of the histograms 520, 530, and 540 represents the pixel intensity and the y axis represents the number of pixels. The audio creation circuitry 120 generates the histograms 520, 530, 540 by determining the red, green, and blue pixel intensities for each pixel in the warm-lighting video 500 and using that plotting the number of pixels corresponding to each pixel intensity. In the illustrated example of FIG. 5, the red histogram 520 has a spike 522, at a pixel intensity of about 1000, indicating there is a large amount of red in the warm-lighting video 500. In some examples, the audio creation circuitry 120 generates other graphs representing the color distribution of the warm-lighting video 500. For example, the audio creation circuitry 120 generates CIE Chromaticity graphs, waveform graphs, vector scope graphs, etc. In the illustrated example of FIG. 5, the audio creation circuitry 120 identifies the warm-lighting video 500 as having a warmer mood. The audio creation circuitry 120 generates happier audio (e.g., music positive lyrics, pop genre, etc.) based on the identified warmer mood.

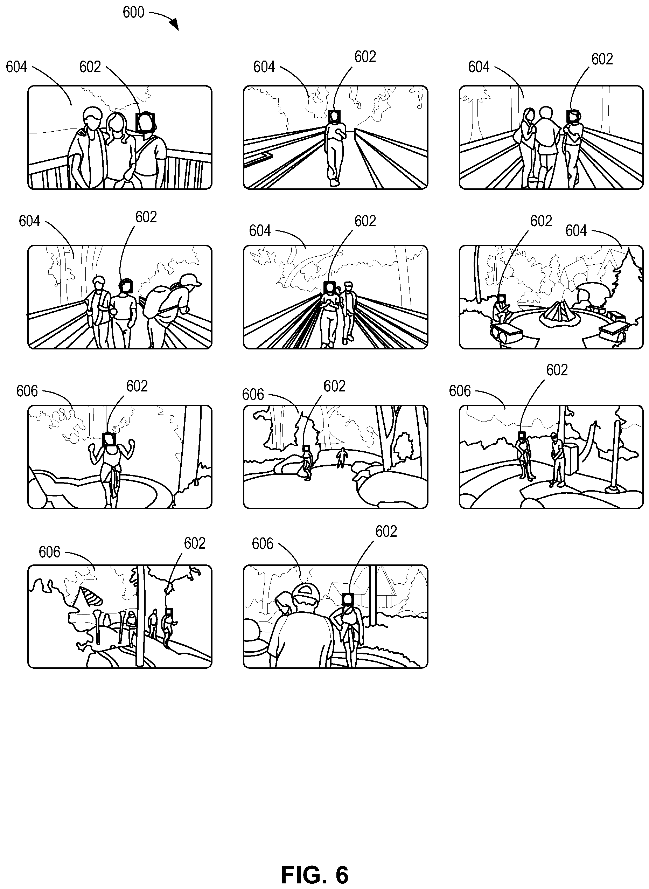

FIG. 6 illustrates person and/or scene detection as performed by the audio creation circuitry 120 of FIG. 1. FIG. 6 includes a plurality of frames 600 from an example source media 110. A first portion of the plurality of frames occur in a first environment 604 and a second environment 606. The first environment 604 is a walking trail in a nature reserve and the second environment 606 is a miniature golf course. The audio creation circuitry 120 identifies the environments 604, 606 and generates audio tracks appropriate for the detected environments 604, 606. For example, the audio creation circuitry 120 may generate an audio track that evokes a feeling of awe or wonder for the walking trail environment. In some examples, the audio creation circuitry 120 performs person detection to determine a number of people in a scene. In some examples, the audio creation circuitry 120 generates audio tracks based on the determined number of people in a scene. For example, detecting only one person in a scene may lead the audio creation circuitry 120 to generate an audio track that evokes a feeling of isolation, depending on the other input variables from the user preferences and the video analysis. In some examples, the audio creation circuitry 120 identifies specific persons across multiple scenes. In the illustrated example of FIG. 6, the audio creation circuitry 120 identified a person 602 that appears throughout the plurality of frames 600. In some examples, the audio creation circuitry 120 generates audio with an emphasis on audio variables for identified persons. For example, the audio creation circuitry 120 may generate an audio track that uses or emphasizes a guitar track every time person 602 appears in the video. In some examples, the content creator 105 can set preferences for music generation variables for specific individuals.

FIG. 7 is a flowchart representative of example machine-readable instructions and/or example operations 700 that may be executed, instantiated, and/or performed by programmable circuitry to generate audio tracks for source media. The example machine-readable instructions and/or the example operations 700 of FIG. 7 begin at block 702, at which the source media accessor circuitry 205 accesses source media 110. The source media 110 may be any one of a variety of formats (e.g., .webm, .mpg, .mp2, mpeg, .mpe, .mpv, .ogg, .mp4, .m4p, .m4v, .avi, .wmv, .mov, .qt, .flv, .swf, etc.). In some examples, the source media access circuitry 205 converts the source media 110 from a first format to a second format. In some examples, the source media 110 includes multiple files. In some examples, the source media access circuitry 110 combines source media 110 files into a single file for processing. In other examples, multiple source media 110 files are processed separately.

At block 704, the media attribute detector circuitry 210 analyzes the source media 110 to detect a media attribute of the source media 110. The media attribute detector circuitry 210 can detect a variety of media attributes of the source media 110, such as whether, and where, the clip contains dialogue; color tone of the video; a type of activity being performed in the video; speed of action in the video; environment(s) detected in the video; person(s) detected in the video; number of people or activity detection; happiness detection; type of video, etc.. In some examples, the media attribute detector circuitry 210 executes a machine learning model to analyze the source media 110. In some examples, the media attribute detector circuitry 210 performs voice isolation processing of the source media 110 to identify dialogue. In some examples, to determine the color grading/warmth of the source media 110, the media attribute detector circuitry 210 performs color analysis. The media attribute detector circuitry 210 may use facial recognition techniques and/or other object recognition techniques to identify specific individuals that appear in the source media 110. However, any other attributes detection technique(s) may additionally or alternatively be used.

In some examples, the media attribute detector circuitry 210 generates values for media attribute parameters corresponding to media attributes detected from the source media 110. For example, the media attribute detector circuitry 210 may generate a value of ten (on a scale of zero to ten) for a happiness level parameter corresponding to a detected happiness level a source media 110 of a sports team winning a championship game. In some examples, media attribute parameters values are numbers within a defined range, numbers corresponding to an absolute value, and/or qualitative values.

In some examples, the media attribute detection circuitry 210 identifies different scene segments in the source media 110. The media attribute detection circuitry 210 identifies changes in scenes by identifying changes in detected media attributes. For example, the media attribute detection circuitry 210 analyzes the source media 110 to identify portions of the source media 110 with different happiness levels, environments, and amount of dialogue and segments the source media 110 into different scenes (e.g., a first scene segment depicting a first scene such as a child's birthday party and a second scene segment depicting a second scene such as a serious conversation between the child's parents) to generate an audio track(s) that are appropriate for each scene segment. In some examples, the media attribute circuitry 210 determines whether the difference in media attributes between two scenes is significant enough to warrant switching to a new style of music and/or distinct audio track or if the requirements of both scenes can be met by adjusting one or more variables of the audio track (e.g., lowering the volume of the audio track in the second scene segment).

At decision block 706, the media attribute detector circuitry 210 determines whether there are additional media attributes to detect. If there are more attributes to detect (e.g., block 706 returns a result of "YES"), the example method 700 returns to block 704 and the media attribute detector circuitry 210 detects another media attribute. If there are no more media attributes to detect (e.g., block 706 returns a result of "NO"), the method proceeds to block 708, at which the user input receiver circuitry 215 accesses user preference selections. User preferences include but are not limited to: duration; background music priority; music preference; a preferred music generating machine learning model; weights, values, and/or other instructions for use of the media attributes.

In some examples, user preferences include a desired variable for the audio track to be generated (e.g., a specific genre of music to be used when a particular individual appears in the video). In some examples, the user input receiver circuitry 215 enables the user to select user preferences from a pre-defined list (e.g., a list of music genres). In some examples, the user input receiver circuitry 215 enables the user to communicate user preferences in plain language user input and processes the user input using natural language comprehension to identify user preference parameters. At block 710, the user input receiver circuitry 215 accesses weighting values for corresponding attributes/preferences. For example, the user input receiver circuitry 215 enables the user to place a high or low priority on the color tone of the video influencing the generation of the audio track. As another example, the user input receiver circuitry 215 enables the user to place a weight on the importance of a user preference corresponding to a minimum length of time for consistent music to be played.

At block 712, the prompt generator circuitry 220 constructs a prompt for a machine learning model based at least in part on detected media attributes, user preferences, and weighting values. The prompt generator circuitry 220 creates the prompt(s) based on a plurality of entries, some of the entries related to the user preferences and some of the entries related to the identified media attributes. In some examples, each entry includes an index to indicate whether the entry is related to a user preference or a media attribute, the variable the entry pertains to, and a value for the variable. In some examples, the prompt generator circuitry 220 executes a programming language to extract text from the plurality of entries to form one or two sentences as the prompt of an AI music generator.

At block 714, the audio generator circuitry 225 generates audio track(s) based on the prompt. In some examples, the audio generator circuitry 225 executes a machine learning model to generate the audio. In some examples, the audio generator circuitry 225 sends the prompt to an external music generating machine learning model. In some examples, the audio generator circuitry 225 executes a machine learning model selected by the user. At block 716, the audio generator circuitry 225 determines whether there are additional audio(s) to create. If there are (e.g., block 706 returns a result of "YES"), the method returns to block 714 and the audio generator circuitry 225 generates more audio(s). If there are not (e.g., block 706 returns a result of "NO"), the method proceeds to block 718, at which the audio provider circuitry 230 provides the generated audio to a media creator application. In some examples, the audio provider circuitry 230 provides the audio track to the content creator 105 directly. In some examples, the audio provider circuitry 230 combines the generated audio track(s) with the source media 110 to generate a combined media and provides the combined media to the content creator 105, directly or via the media creator application. Then, the example method 700 terminates.

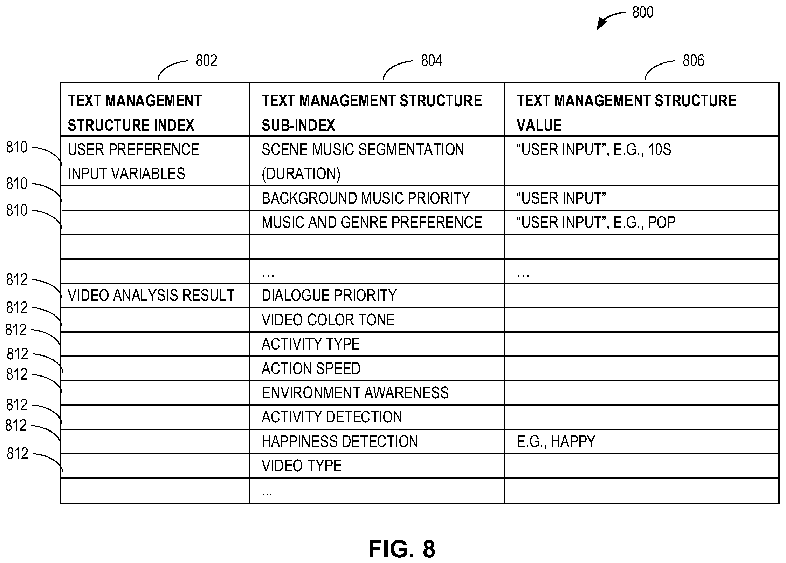

FIG. 8 is a table illustrating an example text management data structure 800 generated by the audio creation circuitry 120 of FIG. 1. The example text management data structure 800 is a table including example user preference entries 810 and example video analysis result entries 812. In some examples, In the illustrated example of FIG. 8, each entry 810, 812 in the example text management data structure 800 includes a text management structure index 802 indicating whether the entry is derived from user preference input variables or a video analysis result, a text management structure sub-index 804 (e.g., the specific variable the entry is directed to), and a text management structure value 806 indicating the value for the variable. In some examples, the text management structure 800 includes additional or alternative information in each entry 810, 812 (e.g., a weight assigned to the entry 810, 812). In some examples, the text management structure 800 includes information and/or is formatted based on the music-generating machine learning model used by the audio creation circuitry 120. The example text management structure 800 is in an example format, however, other text management structure 800 formats may additionally or alternatively be used. The example user preference entries 810 correspond to a user input of 10s duration and pop music. The example video analysis result entries 812 correspond to a happy scene. In some examples, audio creation circuitry 120 executes a programming language to extract the text to form the prompt for the music-generating machine learning model. The programming language, sequentially or in parallel, extracts the data text from the text management data structure 800 to generate the prompt.

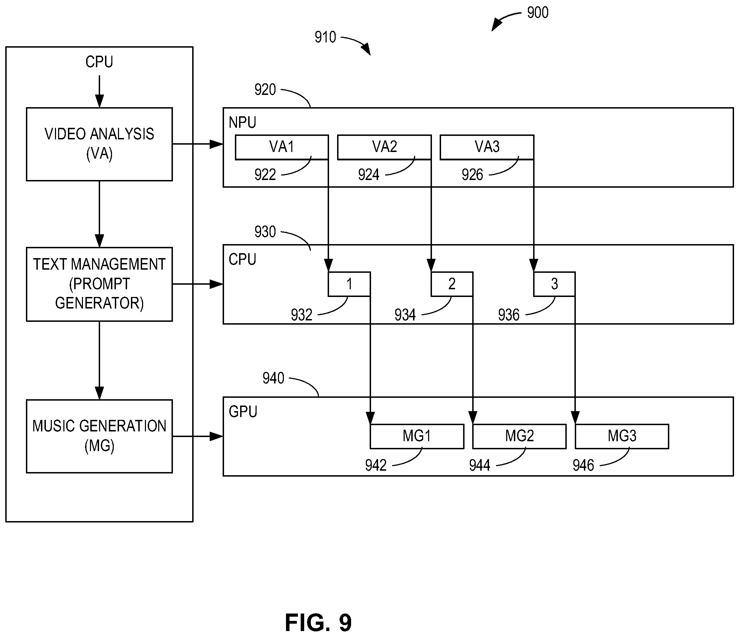

FIG. 9 is a block diagram illustrating an example workload schedule 900 implemented by the audio creation circuitry 120 on an example system 910. The example system 910 includes an example neural processing unit (NPU) 920, an example central processing unit (CPU) 930, and an example graphics processing unit (GPU) 940. In some examples, the audio creation circuitry 120 detects the configuration of a system and submits the workload(s) to the appropriate hardware engine to maximize efficiency. In the illustrated example of FIG. 9, the audio creation circuitry 120 submits video analysis to be performed by the NPU 920, prompt generation (e.g., text management) to be performed by the CPU 930, and music generation to be performed by the GPU 940.

In some examples, the audio creation circuitry 120 causes parallel processing of the workloads. In the illustrated example of FIG. 9, the NPU 920 performs a first video analysis workload 922 for a first scene, a second video analysis workload 924 for a second scene, and a third video analysis workload 926 for a third scene. The example NPU 920 performs the workloads 922, 924, 926 at least partially in parallel. As used herein, performance of workloads "at least partially in parallel" means that performance of a second workload may begin before a first workload is completed, but after the first workload was started. In some examples, the performance of the workloads may be performed in parallel, with multiple workloads being started at substantially the same time. The example CPU 930 performs a first prompt generation workload 932, a second prompt generation workload 934, and a third prompt generation workload 936. The example CPU 930 performs the workloads 932, 934, 936 at least partially in parallel. The example GPU 940 performs a first music generation workload 942, a second music generation workload 944, and a third music generation workload 946. The example GPU 940 performs the workloads 942, 944, 946 at least partially in parallel. In some examples, the distribution of workload between the NPU 920, the CPU 930, and the GPU 940 is different than as shown in FIG. 9. For example, the NPU 920 and the GPU 940 may share responsibility to complete the analysis workloads 922, 924, 926.

In some examples, the system 910 includes a subset of the NPU 920, the CPU 930, and the GPU 940. For example, the system 910 may only include the CPU 930. In that example, the workloads associated with the NPU 920, and the GPU 940 of the example system 910 would be completed by the CPU 930. In other examples, the system 910 includes additional XPUs (e.g., a DPU).

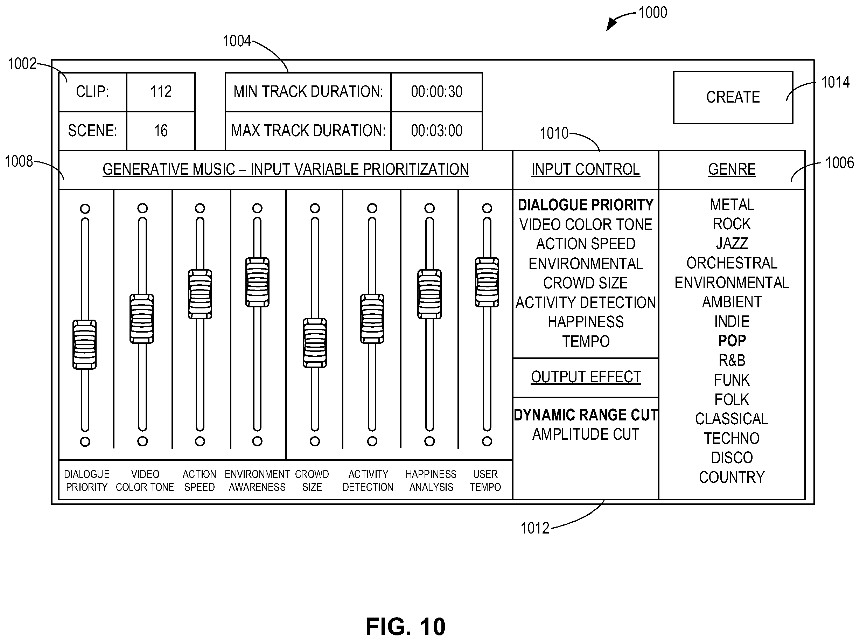

FIG. 10 is an example user interface 1000 implemented by the audio creation circuitry 120 of FIG. 1. In some examples, the example user interface 1000 may be referred to as a generative music prioritization console. The example user interface 1000 enables the content creator 105 to input user preferences for use in audio generation. The example user interface includes an example scene selection panel 1002, and example track duration panel 1004, an example genre selection panel 1006, an example input variable prioritization panel 1008, an example input control panel 1010, an example output effect panel 1012, and an example create button 1014. The scene identifier 1002 displays information identifying the scene the inputs of the content creator 105 will affect music generation for and enables the content creator 105 to select which scene to set preferences for. The user interface 1000 enables the content creator 105 to edit several recordings (from various events) together with minimal effort without having to edit one at a time manually. The scene selection panel 1002 enables the content creator 105 to enter user preferences for the entire video sequence, user preferences for each scene, or even clip level user preferences to direct the audio generation. In some examples, the user interface 1000 also displays an image from the corresponding scene to the content creator 105. The track duration panel 1004 enables the content creator 105 to set a desired track duration for audio generation. In the illustrated example of FIG. 10, the content creator 105 set a minimum track duration limit of thirty seconds and a maximum track duration limit of three minutes. The genre selection panel 1006 enables the content creator 105 to select a desired genre of music for the selected scene. The example genre selection panel 1006 of FIG. 10 indicates the content creator 105 has selected the genre "pop." The input variable prioritization panel 1008 enables the content creator 105 to apply a weight to the input variables for music generation. In the illustrated example of FIG. 10, the environment awareness variable is set to the highest weight of the input variables, while the dialogue priority is set to the lowest weight.

Each of the video analysis variables has its own unique set of control variables. The input control panel 1010 enables the content creator 105 to select a variable and the output effect panel 1012 enables the content creator 105 to select a control for the selected variable. In the illustrated example of FIG. 10, the dialogue priority variable has two options: "Dynamic Range Cut" or "Amplitude Cut." The output control panel of FIG. 10 indicates that the content creator has selected the "Dynamic Range Cut" option. Thus, the dynamic range of the music would be reduced when voice is detected in the source media 110. In some examples, the user interface 1000 enables the content creator 105 to adjust user preferences for iterative adjustments to the generated music. While the video analysis and user inputs would create an initial set of recommendations and music, the content creator 105 can use the selection tools to adjust the user preferences for music generation by adjusting the user preferences accordingly to increase or decrease a particular variable's effect on the background music generative process.

FIG. 11 is a block diagram of an example programmable circuitry platform 1100 structured to execute and/or instantiate the example machine-readable instructions and/or the example operations of FIG. 7 to implement the audio creation circuitry 120 of FIG. 2. The programmable circuitry platform 1100 can be, for example, a server, a personal computer, a workstation, a self-learning machine (e.g., a neural network), a mobile device (e.g., a cell phone, a smart phone, a tablet such as an iPad^{™}), an Internet appliance, a gaming console, a headset (e.g., an augmented reality (AR) headset, a virtual reality (VR) headset, etc.) or other wearable device, or any other type of computing and/or electronic device.

The programmable circuitry platform 1100 of the illustrated example includes programmable circuitry 1112. The programmable circuitry 1112 of the illustrated example is hardware. For example, the programmable circuitry 1112 can be implemented by one or more integrated circuits, logic circuits, FPGAs, microprocessors, CPUs, GPUs, DSPs, and/or microcontrollers from any desired family or manufacturer. The programmable circuitry 1112 may be implemented by one or more semiconductor based (e.g., silicon based) devices. In this example, the programmable circuitry 1112 implements the example source media accessor circuitry 205, the example media attribute detector circuitry 210, the example input receiver circuitry 215, the example prompt generator circuitry 220, the example audio generator circuitry 225, and the example audio provider circuitry 230.

The programmable circuitry 1112 of the illustrated example includes a local memory 1113 (e.g., a cache, registers, etc.). The programmable circuitry 1112 of the illustrated example is in communication with main memory 1114, 1116, which includes a volatile memory 1114 and a non-volatile memory 1116, by a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1116 may be implemented by flash memory and/or any other desired type of memory device. Access to the main memory 1114, 1116 of the illustrated example is controlled by a memory controller 1117. In some examples, the memory controller 1117 may be implemented by one or more integrated circuits, logic circuits, microcontrollers from any desired family or manufacturer, or any other type of circuitry to manage the flow of data going to and from the main memory 1114, 1116.

The programmable circuitry platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1122 are connected to the interface circuitry 1120. The input device(s) 1122 permit(s) a user (e.g., a human user, a machine user, etc.) to enter data and/or commands into the programmable circuitry 1112. The input device(s) 1122 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1100 of the illustrated example also includes one or more mass storage discs or devices 1128 to store firmware, software, and/or data. Examples of such mass storage discs or devices 1128 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1132, which may be implemented by the machine-readable instructions of FIG. 7, may be stored in the mass storage device 1128, in the volatile memory 1114, in the non-volatile memory 1116, and/or on at least one non-transitory computer-readable storage medium such as a CD or DVD which may be removable.

FIG. 12 is a block diagram of an example implementation of the programmable circuitry 1112 of FIG. 11. In this example, the programmable circuitry 1112 of FIG. 11 is implemented by a microprocessor 1200. For example, the microprocessor 1200 may be a general-purpose microprocessor (e.g., general-purpose microprocessor circuitry). The microprocessor 1200 executes some or all of the machine-readable instructions of the flowcharts of FIG. 7 to effectively instantiate the circuitry of FIG. 2 as logic circuits to perform operations corresponding to those machine-readable instructions. In some such examples, the circuitry of FIG. 2 is instantiated by the hardware circuits of the microprocessor 1200 in combination with the machine-readable instructions. For example, the microprocessor 1200 may be implemented by multi-core hardware circuitry such as a CPU, a DSP, a GPU, an XPU, etc. Although it may include any number of example cores 1202 (e.g., 1 core), the microprocessor 1200 of this example is a multi-core semiconductor device including N cores. The cores 1202 of the microprocessor 1200 may operate independently or may cooperate to execute machine-readable instructions. For example, machine code corresponding to a firmware program, an embedded software program, or a software program may be executed by one of the cores 1202 or may be executed by multiple ones of the cores 1202 at the same or different times. In some examples, the machine code corresponding to the firmware program, the embedded software program, or the software program is split into threads and executed in parallel by two or more of the cores 1202. The software program may correspond to a portion or all of the machine-readable instructions and/or operations represented by the flowcharts of FIG. 7.

The cores 1202 may communicate by a first example bus 1204. In some examples, the first bus 1204 may be implemented by a communication bus to effectuate communication associated with one(s) of the cores 1202. For example, the first bus 1204 may be implemented by at least one of an Inter-Integrated Circuit (I2C) bus, a Serial Peripheral Interface (SPI) bus, a PCI bus, or a PCIe bus. Additionally or alternatively, the first bus 1204 may be implemented by any other type of computing or electrical bus. The cores 1202 may obtain data, instructions, and/or signals from one or more external devices by example interface circuitry 1206. The cores 1202 may output data, instructions, and/or signals to the one or more external devices by the interface circuitry 1206. Although the cores 1202 of this example include example local memory 1220 (e.g., Level 1 (L1) cache that may be split into an L1 data cache and an L1 instruction cache), the microprocessor 1200 also includes example shared memory 1210 that may be shared by the cores (e.g., Level 2 (L2 cache)) for high-speed access to data and/or instructions. Data and/or instructions may be transferred (e.g., shared) by writing to and/or reading from the shared memory 1210. The local memory 1220 of each of the cores 1202 and the shared memory 1210 may be part of a hierarchy of storage devices including multiple levels of cache memory and the main memory (e.g., the main memory 1114, 1116 of FIG. 11). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1202 may be referred to as a CPU, DSP, GPU, etc., or any other type of hardware circuitry. Each core 1202 includes control unit circuitry 1214, arithmetic and logic (AL) circuitry (sometimes referred to as an ALU) 1216, a plurality of registers 1218, the local memory 1220, and a second example bus 1222. Other structures may be present. For example, each core 1202 may include vector unit circuitry, single instruction multiple data (SIMD) unit circuitry, load/store unit (LSU) circuitry, branch/jump unit circuitry, floating-point unit (FPU) circuitry, etc. The control unit circuitry 1214 includes semiconductor-based circuits structured to control (e.g., coordinate) data movement within the corresponding core 1202. The AL circuitry 1216 includes semiconductor-based circuits structured to perform one or more mathematic and/or logic operations on the data within the corresponding core 1202. The AL circuitry 1216 of some examples performs integer based operations. In other examples, the AL circuitry 1216 also performs floating-point operations. In yet other examples, the AL circuitry 1216 may include first AL circuitry that performs integer-based operations and second AL circuitry that performs floating-point operations. In some examples, the AL circuitry 1216 may be referred to as an Arithmetic Logic Unit (ALU).

The registers 1218 are semiconductor-based structures to store data and/or instructions such as results of one or more of the operations performed by the AL circuitry 1216 of the corresponding core 1202. For example, the registers 1218 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1218 may be arranged in a bank as shown in FIG. 12. Alternatively, the registers 1218 may be organized in any other arrangement, format, or structure, such as by being distributed throughout the core 1202 to shorten access time. The second bus 1222 may be implemented by at least one of an I2C bus, a SPI bus, a PCI bus, or a PCIe bus.

Each core 1202 and/or, more generally, the microprocessor 1200 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1200 is a semiconductor device fabricated to include many transistors interconnected to implement the structures described above in one or more integrated circuits (ICs) contained in one or more packages.

The microprocessor 1200 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1200, in the same chip package as the microprocessor 1200 and/or in one or more separate packages from the microprocessor 1200.

FIG. 13 is a block diagram of another example implementation of the programmable circuitry 1112 of FIG. 11. In this example, the programmable circuitry 1112 is implemented by FPGA circuitry 1300. For example, the FPGA circuitry 1300 may be implemented by an FPGA. The FPGA circuitry 1300 can be used, for example, to perform operations that could otherwise be performed by the example microprocessor 1200 of FIG. 12 executing corresponding machine-readable instructions. However, once configured, the FPGA circuitry 1300 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 1200 of FIG. 12 described above (which is a general purpose device that may be programmed to execute some or all of the machine-readable instructions represented by the flowchart of FIG. 7 but whose interconnections and logic circuitry are fixed once fabricated), the FPGA circuitry 1300 of the example of FIG. 13 includes interconnections and logic circuitry that may be configured, structured, programmed, and/or interconnected in different ways after fabrication to instantiate, for example, some or all of the operations/functions corresponding to the machine-readable instructions represented by the flowchart of FIG. 7. In particular, the FPGA circuitry 1300 may be thought of as an array of logic gates, interconnections, and switches. The switches can be programmed to change how the logic gates are interconnected by the interconnections, effectively forming one or more dedicated logic circuits (unless and until the FPGA circuitry 1300 is reprogrammed). The configured logic circuits enable the logic gates to cooperate in different ways to perform different operations on data received by input circuitry. Those operations may correspond to some or all of the instructions (e.g., the software and/or firmware) represented by the flowchart of FIG. 7. As such, the FPGA circuitry 1300 may be configured and/or structured to effectively instantiate some or all of the operations/functions corresponding to the machine-readable instructions of the flowchart of FIG. 7 as dedicated logic circuits to perform the operations/functions corresponding to those software instructions in a dedicated manner analogous to an ASIC. Therefore, the FPGA circuitry 1300 may perform the operations/functions corresponding to the some or all of the machine-readable instructions of FIG. 7 faster than the general-purpose microprocessor can execute the same.

In the example of FIG. 13, the FPGA circuitry 1300 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

The FPGA circuitry 1300 of FIG. 13, includes example input/output (I/O) circuitry 1302 to obtain and/or output data to/from example configuration circuitry 1304 and/or external hardware 1306. For example, the configuration circuitry 1304 may be implemented by interface circuitry that may obtain a binary file, which may be implemented by a bit stream, data, and/or machine-readable instructions, to configure the FPGA circuitry 1300, or portion(s) thereof. In some such examples, the configuration circuitry 1304 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1306 may be implemented by external hardware circuitry. For example, the external hardware 1306 may be implemented by the microprocessor 1200 of FIG. 12.

The FPGA circuitry 1300 also includes an array of example logic gate circuitry 1308, a plurality of example configurable interconnections 1310, and example storage circuitry 1312. The logic gate circuitry 1308 and the configurable interconnections 1310 are configurable to instantiate one or more operations/functions that may correspond to at least some of the machine-readable instructions of FIG. 7 and/or other desired operations. The logic gate circuitry 1308 shown in FIG. 13 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1308 to enable configuration of the electrical structures and/or the logic gates to form circuits to perform desired operations/functions. The logic gate circuitry 1308 may include other electrical structures such as look-up tables (LUTs), registers (e.g., flip-flops or latches), multiplexers, etc.

The configurable interconnections 1310 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1308 to program desired logic circuits.

The storage circuitry 1312 of the illustrated example is structured to store result(s) of the one or more of the operations performed by corresponding logic gates. The storage circuitry 1312 may be implemented by registers or the like. In the illustrated example, the storage circuitry 1312 is distributed amongst the logic gate circuitry 1308 to facilitate access and increase execution speed.

The example FPGA circuitry 1300 of FIG. 13 also includes example dedicated operations circuitry 1314. In this example, the dedicated operations circuitry 1314 includes special purpose circuitry 1316 that may be invoked to implement commonly used functions to avoid the need to program those functions in the field. Examples of such special purpose circuitry 1316 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1300 may also include example general purpose programmable circuitry 1318 such as an example CPU 1320 and/or an example DSP 1322. Other general purpose programmable circuitry 1318 may additionally or alternatively be present such as a GPU, an XPU, etc., that can be programmed to perform other operations.

Although FIGS. 12 and 13 illustrate two example implementations of the programmable circuitry 1112 of FIG. 11, many other approaches are contemplated. For example, FPGA circuitry may include an on-board CPU, such as one or more of the example CPU 1320 of FIG. 12. Therefore, the programmable circuitry 1112 of FIG. 11 may additionally be implemented by combining at least the example microprocessor 1200 of FIG. 12 and the example FPGA circuitry 1300 of FIG. 13. In some such hybrid examples, one or more cores 1202 of FIG. 12 may execute a first portion of the machine-readable instructions represented by the flowchart of FIG. 7 to perform first operation(s)/function(s), the FPGA circuitry 1300 of FIG. 13 may be configured and/or structured to perform second operation(s)/function(s) corresponding to a second portion of the machine-readable instructions represented by the flowcharts of FIG. 7, and/or an ASIC may be configured and/or structured to perform third operation(s)/function(s) corresponding to a third portion of the machine-readable instructions represented by the flowcharts of FIG. 7.

It should be understood that some or all of the circuitry of FIG. 2 may, thus, be instantiated at the same or different times. For example, same and/or different portion(s) of the microprocessor 1200 of FIG. 12 may be programmed to execute portion(s) of machine-readable instructions at the same and/or different times. In some examples, same and/or different portion(s) of the FPGA circuitry 1300 of FIG. 13 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1200 of FIG. 12 may execute machine-readable instructions in one or more threads executing concurrently and/or in series. In some examples, the FPGA circuitry 1300 of FIG. 13 may be configured and/or structured to carry out operations/functions concurrently and/or in series. Moreover, in some examples, some or all of the circuitry of FIG. 2 may be implemented within one or more virtual machines and/or containers executing on the microprocessor 1200 of FIG. 12.

In some examples, the programmable circuitry 1112 of FIG. 11 may be in one or more packages. For example, the microprocessor 1200 of FIG. 12 and/or the FPGA circuitry 1300 of FIG. 13 may be in one or more packages. In some examples, an XPU may be implemented by the programmable circuitry 1112 of FIG. 11, which may be in one or more packages. For example, the XPU may include a CPU (e.g., the microprocessor 1200 of FIG. 12, the CPU 1320 of FIG. 13, etc.) in one package, a DSP (e.g., the DSP 1322 of FIG. 13) in another package, a GPU in yet another package, and an FPGA (e.g., the FPGA circuitry 1300 of FIG. 13) in still yet another package.

A block diagram illustrating an example software distribution platform 1405 to distribute software such as the example machine-readable instructions 1132 of FIG. 11 to other hardware devices (e.g., hardware devices owned and/or operated by third parties from the owner and/or operator of the software distribution platform) is illustrated in FIG. 14. The example software distribution platform 1405 may be implemented by any computer server, data facility, cloud service, etc., capable of storing and transmitting software to other computing devices. The third parties may be customers of the entity owning and/or operating the software distribution platform 1405. For example, the entity that owns and/or operates the software distribution platform 1405 may be a developer, a seller, and/or a licensor of software such as the example machine-readable instructions 1132 of FIG. 11. The third parties may be consumers, users, retailers, OEMs, etc., who purchase and/or license the software for use and/or re-sale and/or sub-licensing. In the illustrated example, the software distribution platform 1405 includes one or more servers and one or more storage devices. The storage devices store the machine-readable instructions 1132, which may correspond to the example machine-readable instructions of FIG. 7, as described above. The one or more servers of the example software distribution platform 1405 are in communication with an example network 1410, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 1132 from the software distribution platform 1405. For example, the software, which may correspond to the example machine-readable instructions of FIG. 7, may be downloaded to the example programmable circuitry platform 1100, which is to execute the machine-readable instructions 1132 to implement the audio creation circuitry 120. In some examples, one or more servers of the software distribution platform 1405 periodically offer, transmit, and/or force updates to the software (e.g., the example machine-readable instructions 1132 of FIG. 11) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that analyze source media to identify key features of the source media and automatically generate audio tracks that align with the identified features. Example systems, apparatus, articles of manufacture, and methods disclosed herein generate copyright-free music tailored to source media, enabling content creators to efficiently create media without risk of violating copyright rules enforced by various media publishing platforms. Example systems, apparatus, articles of manufacture, and methods disclosed herein enable varying degrees of content creator control over audio track generation to generate audio tracks adapted to the source media without requiring extensive user effort. Disclosed systems, apparatus, articles of manufacture, and methods improve the efficiency of using a computing device by providing a text management structure implementing a prompt generation format for streamlined prompt generation based on video analysis results and user preferences, reducing computing costs (e.g., time, computing resources required, etc.) associated with prompt generation. Furthermore, disclosed systems, apparatus, articles of manufacture, and methods maximize compute resource efficiency of a computing device by detecting the configuration of the system and coordinating workloads based on the configuration, as well as performing workloads at least partially in parallel to reduce total compute time. Disclosed systems, apparatus, articles of manufacture, and methods are accordingly directed to one or more improvement(s) in the operation of a machine such as a computer or other electronic and/or mechanical device.

Systems, apparatus, articles of manufacture, and methods are disclosed for dynamic music creation in video content creation applications. Further examples and combinations thereof include the following:
Example 1 includes an apparatus to generate audio tracks for a video content creation application including interface circuitry, machine-readable instructions, and at least one processor circuit to be programmed by the machine-readable instructions to: analyze a video to determine video characteristics; generate a prompt for a machine learning model based on the video characteristics and at least one user preference; provide the prompt to machine learning model execution circuitry to cause generation of an audio track based on the prompt; and provide the audio track to a video content creation application.
Example 2 includes the apparatus of example 1, wherein one or more of the at least one processor circuit is to cause presentation of a user interface, the user interface to allow a user to set the at least one user preference for audio generation.
Example 3 includes the apparatus of any of examples 1 or 2, wherein one or more of the at least one processor circuit is to: generate, in response to the user updating the at least one user preference to create at least one updated user preference, a second prompt for the machine learning model based on the at least one updated user preference; provide the second prompt to the machine learning model execution circuitry to cause generation of a second audio track based on the second prompt; and provide the second audio track to the video content creation application.
Example 4 includes the apparatus of any of examples 1-3, wherein the at least one processor circuit includes a neural processing unit (NPU), a central processing unit (CPU), and a graphics processing unit (GPU).
Example 5 includes the apparatus of any of examples 1-4, wherein the at least one user preference includes at least one of a genre preference, an audio track duration, a priority of the audio track, and weights for respective video characteristics for prompt generation.
Example 6 includes the apparatus of any of examples 1-5, wherein the video characteristics include at least one of a presence of speech, a color tone of the video, a type of activity shown, individuals shown, a level of happiness, a type of the video, a speed of action, an environment of the video, and a number of people in the video.
Example 7 includes the apparatus of any of examples 1-6, wherein the machine learning model is a first machine learning model and one or more of the at least one processor circuit is to execute a second machine learning model to analyze the video to determine video characteristics.
Example 8 includes the apparatus of any of examples 1-7, wherein the video is a first video, the video characteristics are first video characteristics, the prompt is a first prompt, the audio track is a first audio track, and one or more of the at least one processor circuit is to: analyze a second video, at least partially in parallel with the first video, to determine second video characteristics; generate a second prompt for the machine learning model based on the second video characteristics; provide the second prompt to the machine learning model execution circuitry to cause generation of a second audio track based on the second prompt, at least partially in parallel with the generation of the first audio track; and provide the second audio track, with the first audio track, to the video content creation application.
Example 9 includes at least one non-transitory machine-readable medium including machine-readable instructions to cause at least one processor circuit to at least: analyze a video to determine video characteristics; generate a prompt for a machine learning model based on the video characteristics and at least one user preference parameter; provide the prompt to machine learning model execution circuitry to cause generation of an audio track based on the prompt; and provide the audio track to a media creation application.
Example 10 includes the storage medium of example 9, wherein the machine-readable instructions are to cause one or more of the at least one processor circuit to at least cause presentation of a user interface, the user interface to allow a user to set the at least one user preference parameter for audio generation.
Example 11 includes the storage medium of any of examples 9 or 10, wherein the machine-readable instructions are to cause one or more of the at least one processor circuit to: generate, in response to the user updating the at least one user preference parameter to create at least one updated user preference parameter, a second prompt for the machine learning model based on the at least one updated user preference parameter; provide the second prompt to the machine learning model execution circuitry to cause generation of a second audio track based on the second prompt; and provide the second audio track to the media creation application.
Example 12 includes the storage medium of any of examples 9-11, wherein the at least one processor circuit includes a neural processing unit (NPU), a central processing unit (CPU), and a graphics processing unit (GPU).
Example 13 includes the storage medium of any of examples 9-12, wherein the at least one user preference parameter includes at least one of a genre preference, an audio track duration, a priority of the audio track, and weights for respective video characteristics for prompt generation.
Example 14 includes the storage medium of any of examples 9-13, wherein the video characteristics include at least one of a presence of speech, a color tone of the video, a type of activity shown, individuals shown, a level of happiness, a type of the video, a speed of action, an environment of the video, and a number of people in the video.
Example 15 includes the storage medium of any of examples 9-14, wherein the machine learning model is a first machine learning model and the machine-readable instructions are to cause one or more of the at least one processor circuit to execute a second machine learning model to analyze the video to determine video characteristics.
Example 16 includes the storage medium of any of examples 9-15, wherein the video is a first video, the video characteristics are first video characteristics, the prompt is a first prompt, the audio track is a first audio track, and the machine-readable instructions are to cause one or more of the at least one processor circuit to: analyze a second video, at least partially in parallel with the first video, to determine second video characteristics; generate a second prompt for the machine learning model based on the second video characteristics; provide the second prompt to the machine learning model execution circuitry to cause generation of a second audio track based on the second prompt, at least partially in parallel with the generation of the first audio track; and provide the second audio track, with the first audio track, to the media creation application.
Example 17 includes a method for audio track generation for video content, including: analyzing a video to determine video characteristics; generating, by at least one processor circuit programmed by at least one instruction, a prompt for a machine learning model based on the video characteristics and at least one user preference parameter; providing, by one or more of the at least one processor circuit, the prompt to machine learning model execution circuitry to cause generation of an audio track based on the prompt; and providing the audio track to a media creation application.
Example 18 includes the method of example 17, further including causing presentation of a user interface, the user interface to allow a user to set the at least one user preference parameter for audio generation.
Example 19 includes the method of any of examples 17 or 18, further including: generating, in response to the user updating the at least one user preference parameter to create at least one updated user preference parameter, a second prompt for the machine learning model based on the at least one updated user preference parameter; providing the second prompt to the machine learning model execution circuitry to cause generation of a second audio track based on the second prompt; and providing the second audio track to the media creation application.
Example 20 includes the method of any of examples 17-19, wherein analyzing the video to determine video characteristics includes executing a second machine learning model.
Example 21 includes the method of any of examples 17-20, wherein the at least one processor circuit includes a neural processing unit (NPU), a central processing unit (CPU), and a graphics processing unit (GPU).
Example 22 includes the method of any of examples 17-21, wherein the at least one user preference parameter includes at least one of a genre preference, an audio track duration, a priority of the audio track, and a weight for the respective video characteristics for prompt generation.
Example 23 includes the method of any of examples 17-22, wherein the video characteristics include at least one of a presence of speech, a color tone of the video, a type of activity shown, individuals shown, a level of happiness, a type of the video, a speed of action, an environment of the video, and a number of people in the video.
Example 24 includes the method of any of examples 17-23, wherein the video is a first video, the video characteristics are first video characteristics, the prompt is a first prompt, the audio track is a first audio track, further including: analyzing a second video in parallel with the first video to determine second video characteristics; generating a second prompt for the machine learning model based on the second video characteristics; providing the second prompt to the machine learning model execution circuitry to cause generation of a second audio track based on the second prompt, in parallel with the generation of the first audio track; and providing the second audio track, with the first audio track, to the media creation application.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method for audio track generation for video content, comprising:
analyzing a video to determine video characteristics;
generating, by at least one processor circuit programmed by at least one instruction, a prompt for a machine learning model based on the video characteristics and at least one user preference parameter;
providing, by one or more of the at least one processor circuit, the prompt to machine learning model execution circuitry to cause generation of an audio track based on the prompt; and
providing the audio track to a media creation application.

2. The method of claim 1, further including causing presentation of a user interface, the user interface to allow a user to set the at least one user preference parameter for audio generation.

3. The method of claim 2, further including:
generating, in response to the user updating the at least one user preference parameter to create at least one updated user preference parameter, a second prompt for the machine learning model based on the at least one updated user preference parameter;
providing the second prompt to the machine learning model execution circuitry to cause generation of a second audio track based on the second prompt; and
providing the second audio track to the media creation application.

4. The method of claim 1, wherein analyzing the video to determine video characteristics includes executing a second machine learning model.

5. The method of any of claims 1-4, wherein the at least one processor circuit includes a neural processing unit (NPU), a central processing unit (CPU), and a graphics processing unit (GPU).

6. The method of any of claims 1-5, wherein the at least one user preference parameter includes at least one of a genre preference, an audio track duration, a priority of the audio track, and a weight for the respective video characteristics for prompt generation.

7. The method of any of claims 1-6, wherein the video characteristics include at least one of a presence of speech, a color tone of the video, a type of activity shown, individuals shown, a level of happiness, a type of the video, a speed of action, an environment of the video, and a number of people in the video.

8. The method of any of claims 1-7, wherein the video is a first video, the video characteristics are first video characteristics, the prompt is a first prompt, the audio track is a first audio track, further including:
analyzing a second video in parallel with the first video to determine second video characteristics;
generating a second prompt for the machine learning model based on the second video characteristics;
providing the second prompt to the machine learning model execution circuitry to cause generation of a second audio track based on the second prompt, in parallel with the generation of the first audio track; and
providing the second audio track, with the first audio track, to the media creation application.

9. At least one non-transitory machine-readable medium comprising machine-readable instructions to cause at least one processor circuit to at least:
analyze a video to determine video characteristics;
generate a prompt for a machine learning model based on the video characteristics and at least one user preference parameter;
provide the prompt to machine learning model execution circuitry to cause generation of an audio track based on the prompt; and
provide the audio track to a media creation application.

10. The at least one non-transitory machine-readable medium of claim 9, wherein the machine-readable instructions are to cause one or more of the at least one processor circuit to at least cause presentation of a user interface, the user interface to allow a user to set the at least one user preference parameter for audio generation.

11. The at least one non-transitory machine-readable medium of claim 10, wherein the machine-readable instructions are to cause one or more of the at least one processor circuit to:
generate, in response to the user updating the at least one user preference parameter to create at least one updated user preference parameter, a second prompt for the machine learning model based on the at least one updated user preference parameter;
provide the second prompt to the machine learning model execution circuitry to cause generation of a second audio track based on the second prompt; and
provide the second audio track to the media creation application.

12. The at least one non-transitory machine-readable medium of any one of claims 9-11, wherein the at least one processor circuit includes a neural processing unit (NPU), a central processing unit (CPU), and a graphics processing unit (GPU).

13. The at least one non-transitory machine-readable medium of any one of claims 9-12, wherein the at least one user preference parameter includes at least one of a genre preference, an audio track duration, a priority of the audio track, and weights for the respective video characteristics for prompt generation.

14. The at least one non-transitory machine-readable medium of any one of claims 9-13, wherein the video characteristics include at least one of a presence of speech, a color tone of the video, a type of activity shown, individuals shown, a level of happiness, a type of the video, a speed of action, an environment of the video, and a number of people in the video.

15. An apparatus comprising means to perform a method as claimed in any preceding claim.
